# FASCICULE DE BREVET EUROPEEN

(11) **EP 3 492 249 B1**
(45) Date de publication et mention de la délivrance du brevet: **08.04.2026**
(21) Numéro de dépôt: 18207137.3
(22) Date de dépôt: 20.11.2018
(51) Int. Cl.: B29C 70/32, B29C 70/38, B29C 70/56, B65H 23/00, B65H 59/00

(54) **PROCÉDÉ ET INSTALLATION DE BOBINAGE D'UNE BANDE DE TISSU PRÉ-IMPRÉGNÉE SUR UNE SURFACE INCLINÉE**
VERFAHREN UND ANLAGE ZUM WICKELN EINES VORIMPRÄGNIERTEN STOFFBANDS AUF EINE GENEIGTE OBERFLÄCHE
METHOD AND INSTALLATION FOR WINDING A PRE-IMPREGNATED FABRIC STRIP ON AN INCLINED SURFACE

(30) Priorité: 29.11.2017 FR 1761349
(43) Date de publication de la demande: 05.06.2019
(73) Titulaire: ArianeGroup SAS, 78130 Les Mureaux (FR)
(72) Inventeur: PAGES-XATART, Guillaume, 33320 Le Taillan Medoc (FR); PRAUD, Thierry, 33127 Martignas sur Jalle (FR); MALRAS, Nicolas, 33400 Talence (FR); DESEUR, Simon, 64100 Bayonne (FR)
(74) Mandataire: Cabinet Beau de Loménie

(56) Documents cités:
- EP-A1- 2 979 852
- FR-A1- 2 656 826
- US-A1- 2008 160 122
- US-A1- 2012 007 278
- US-B1- 6 390 169
- US-B1- 6 585 842

## Description

### Arrière-plan de l'invention

La présente invention concerne la formation d'une préforme fibreuse par bobinage ou enroulement d'une bande de tissu sur une surface inclinée, la préforme étant destinée à la fabrication de pièces en matériau composite présentant une forme non développable.

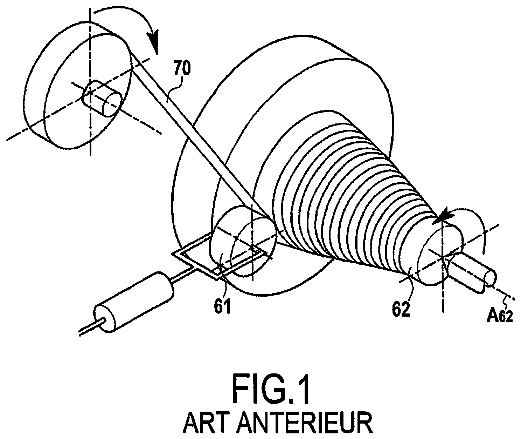

Comme illustré sur la figure 1, un procédé de bobinage connu consiste à déposer entre un galet presseur 61 et la surface externe non développable d'un outillage de révolution 62 en rotation autour d'un axe A₆₂, une ou plusieurs bandes de tissu 70 pré-imprégnées d'une résine précurseur d'une matrice, la ou les bandes de tissu présentant des dimensions et des orientations de fibres définies selon la pièce finale en matériau composite à réaliser. Les bandes de tissus pré-imprégnées 70 sont enroulées sur l'outillage 62 parallèlement à l'axe de révolution A₆₂ de celui-ci.

Le document EP 0 147 297 divulgue un procédé de bobinage de bandes de tissu sur un mandrin rotatif de révolution non cylindrique.

Le document US 2012/007278 A1 divulgue un procédé et une installation selon le préambule des revendications 1 et 3.

Si le procédé décrit ci-avant peut être mis en œuvre de manière au moins semi-automatique, il limite toutefois la qualité des préformes qui peuvent être ainsi obtenues. En effet, l'enroulement de bandes de tissu parallèlement à l'axe de révolution d'un outillage présentant une forme de révolution non développable ne permet pas d'épouser la forme de l'outillage, ce qui peut entraîner des plis dans les bords des bandes de tissu déposées et, par conséquent, des irrégularités dans la préforme nécessitant des usinages ou reprises ultérieures.

### Objet et résumé de l'invention

Il est donc souhaitable de pouvoir disposer d'une solution permettant de bobiner des bandes de tissu pré-imprégnées sur un outillage présentant au moins en partie une surface de révolution non développable avec des bandes qui épousent parfaitement chaque singularité de forme de l'outillage, et ce de manière automatique et répétable.

A cet effet, selon l'invention et la revendication 1, il est proposé un procédé de bobinage d'une bande de tissu pré-imprégnée sur une surface inclinée, la bande de tissu pré-imprégnée s'étendant en longueur suivant une direction longitudinale et en largeur suivant une direction transversale, le procédé comprenant :
- une étape de déformation de la bande de tissu pré-imprégnée par application d'un effort de traction différentiel sur la bande de tissu pré-imprégnée, l'effort de traction étant dirigé dans la direction longitudinale de la bande, la valeur de l'effort de traction appliqué étant différente suivant la direction transversale de la bande, l'application de l'effort de traction différentiel étant réalisée par mise en tension de la bande de tissu pré-imprégnée entre, d'une part, une paire de rouleaux de freinage et, d'autre part, un dispositif de traction présent en aval de la paire de rouleaux de freinage, le dispositif de traction entraînant la bande de tissu pré-imprégnée à des vitesses différentes suivant la direction transversale de la bande,
- une étape d'enroulement de la bande déformée sur une surface de révolution d'un outillage de bobinage comportant au moins une portion formant un angle non nul avec l'axe de révolution de la surface de révolution.

En appliquant un effort de traction sur la bande de tissu différent suivant la direction transversale de la bande avant son enroulement sur une surface de révolution non développable, celle-ci est déformée automatiquement de manière à lui conférer une courbure en allongeant un de ces bords par rapport à son autre bord. La bande épouse ainsi plus facilement la géométrie non développable de l'outillage de bobinage, ce qui permet d'obtenir une préforme homogène sans plis, et ce de manière automatique, fiable et répétable. La vitesse de bobinage peut être alors augmentée par rapport à un procédé de bobinage mis en œuvre manuellement, ce qui permet d'avoir une cadence de production élevée.

Le dispositif de traction comprend l'outillage de bobinage ayant une surface de révolution comportant au moins une portion formant un angle non nul avec l'axe de révolution de la surface de révolution et un rouleau de bobinage comprenant une pluralité de galets libres en rotation indépendamment les uns des autres, l'outillage de bobinage étant entraîné en rotation et le rouleau de bobinage exerçant sur la bande de tissu pré-imprégnée une pression de contact dirigée vers la surface de révolution de l'outillage de bobinage.

Lors de son passage entre les galets du rouleau de bobinage et la surface de l'outillage de bobinage, la bande de tissu est déformée par application d'un effort de traction différentiel sur celle-ci dirigé dans la direction longitudinale de la bande, les galets étant entraînés en rotation à des vitesses différentes suivant leur position sur le rouleau de bobinage. Plus précisément, le galet situé à une première extrémité du rouleau et en contact avec une portion de petit diamètre de l'outillage tourne à une vitesse inférieure par rapport à celles des autres galets adjacents qui sont en contact avec des portions de diamètre plus important de l'outillage. La valeur de l'effort de traction appliqué sur la bande est, par conséquent différent suivant la direction transversale de la bande puisque le dispositif de traction formé ici du rouleau de bobinage et de l'outillage de bobinage entraîne la bande à des vitesses différentes suivant la direction transversale de la bande. En sortie du dispositif de traction, c'est-à-dire lors de sa dépose sur la surface de l'outillage de bobinage, la bande est déformée de manière à lui conférer une courbure. Ainsi, après déformation, la bande de tissu pré-imprégnée épouse parfaitement la géométrie de la surface inclinée de l'outillage de bobinage.

Selon un autre mode de réalisation du procédé de bobinage ne faisant pas partie de la présente invention, le dispositif de traction comprend des premier et deuxième rouleaux d'entraînement comprenant chacun une pluralité de galets, les galets du premier rouleau d'entraînement étant respectivement placés en vis-à-vis des galets du deuxième rouleau d'entraînement, les galets du premier rouleau d'entraînement étant entrainés en rotation suivant des vitesses de rotation différentes tandis que les galets du deuxième rouleau d'entraînement sont libres en rotation indépendamment les uns des autres, le premier rouleau d'entraînement exerçant une pression de contact dirigée vers le deuxième rouleau ou inversement.

La bande de tissu est déformée lors de son passage entre les rouleaux d'entraînement qui entraînent la bande à des vitesses différentes suivant la direction transversale de la bande. La vitesse de chaque paire de galets en vis-à-vis des rouleaux d'entraînement peut être définie en fonction de la géométrie de la surface de l'outillage de bobinage sur lequel la bande doit être déposée. Ainsi, après déformation, la bande de tissu pré-imprégnée épouse parfaitement la géométrie de la surface inclinée de l'outillage de bobinage.

Selon une caractéristique particulière du procédé de l'invention, celui-ci comprend en outre, avant ou pendant l'étape de déformation, une étape de chauffage de la bande de tissu pré-imprégnée d'une résine à une température supérieure ou égale à la température de ramollissement de la résine. Cela permet de faciliter la déformation de la bande de tissu pré-imprégnée notamment lorsque la résigne d'imprégnation présente une température de ramollissement significativement plus élevée que la température ambiante. La température de ramollissement de la résine correspond à la température à laquelle elle commence à devenir suffisamment fluide, par exemple pâteuse ou liquide, pour faciliter la déformation de la bande. La température de ramollissement est toutefois inférieure à la température à laquelle la résine commence à polymériser.

L'invention a également pour objet, selon la revendication 3, une installation pour le bobinage d'une bande de tissu pré-imprégnée sur une surface inclinée, l'installation comprenant un outillage de bobinage présentant une surface de révolution comportant au moins une portion formant un angle non nul avec l'axe de révolution de la surface de révolution et un dispositif de déformation présent en aval de l'outillage de bobinage, le dispositif de déformation comprenant une paire de rouleaux de freinage et un dispositif de traction présent en aval de la paire de rouleaux de freinage, le dispositif de traction étant apte à entraîner la bande de tissu pré-imprégnée à des vitesses différentes suivant la direction transversale de la bande.

Le dispositif de traction comprend un rouleau de bobinage comprenant une pluralité de galets libres en rotation indépendamment les uns des autres, le rouleau de bobinage exerçant une pression de contact dirigée vers la surface de révolution de l'outillage de bobinage. Selon un aspect particulier de ce mode de réalisation, les galets du rouleau de bobinage sont supportés par un arbre apte à se déformer afin d'éviter des effets de bord de type pincement dans les bandes.

Selon un autre mode de réalisation de l'installation ne faisant pas partie de la présente invention, le dispositif de traction comprend des premier et deuxième rouleaux d'entraînement comprenant chacun une pluralité de galets, les galets du premier rouleau d'entraînement étant respectivement placés en vis-à-vis des galets du deuxième rouleau d'entraînement, le premier rouleau d'entraînement exerçant une pression de contact dirigée vers le deuxième rouleau ou inversement.

Selon une caractéristique particulière de l'installation de l'invention, celle-ci comprend en outre un dispositif de chauffage présent en amont du dispositif de traction ou intégré à celui-ci.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique d'une installation de bobinage selon l'art antérieur,
- la figure 2 est une vue schématique en perspective d'une installation de bobinage d'une bande de tissu pré-imprégnée conformément à un mode de réalisation de l'invention,
- la figure 3 est une vue de dessus de l'installation de la figure 2,
- la figure 4 est une vue agrandie du dispositif de déformation de l'installation de la figure 2,
- la figure 5 est une vue schématique montrant la déformation d'une bande pré-imprégnée après son passage dans le dispositif de déformation de l'installation de la figure 2,
- la figure 6 est une vue schématique en perspective d'une installation de bobinage d'une bande de tissu pré-imprégnée conformément à autre un mode de réalisation ne faisant pas partie de la présente invention.

### Description détaillée de modes de réalisation

L'invention s'applique d'une manière générale au bobinage d'une bande de tissu pré-imprégnée sur une surface inclinée pour la réalisation de pièces en matériau composite correspondant notamment, mais pas exclusivement, à des pièces de révolution telles que des divergents de moteur-fusée.

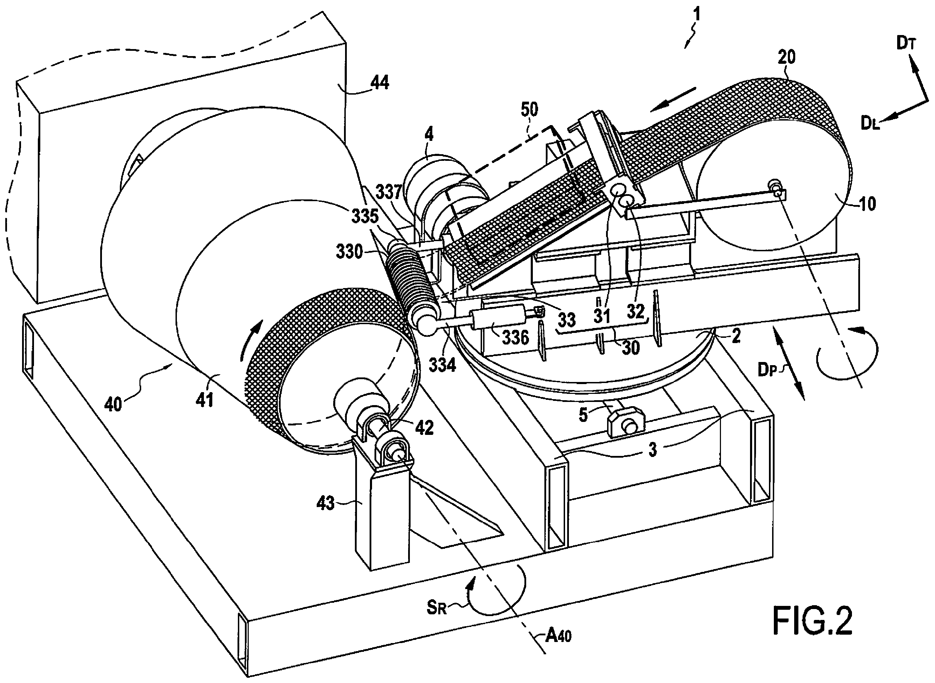

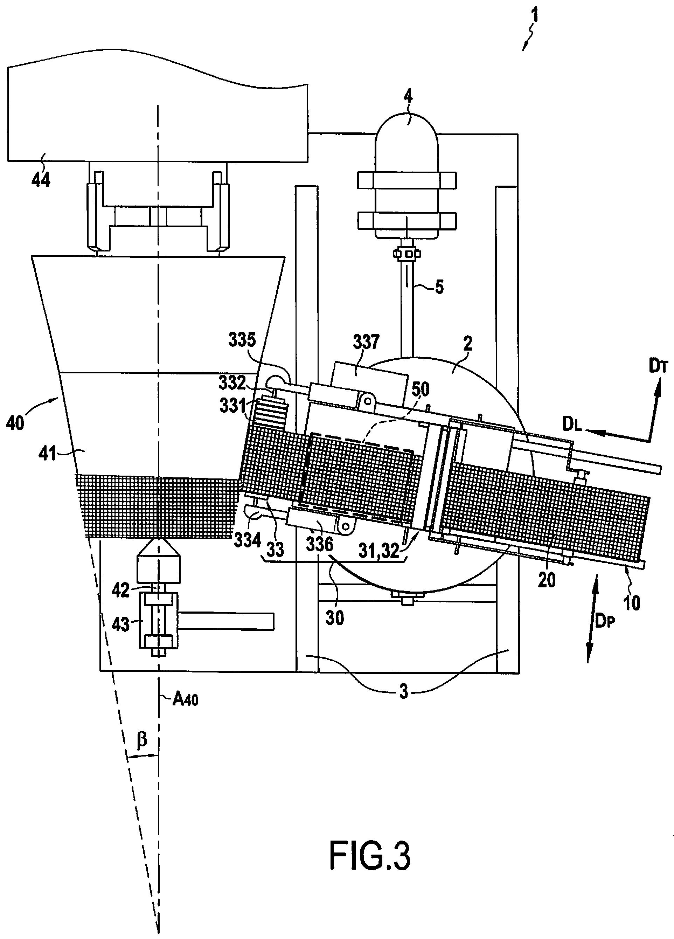

Les figures 2 et 3 représentent une installation 1 pour le bobinage d'une bande de tissu pré-imprégnée conformément à un mode de réalisation de l'invention. L'installation 1 comprend une bobine 10 sur laquelle est stockée une bande de tissu pré-imprégnée 20, un dispositif de déformation 30 en aval de la bobine 10 et un outillage de bobinage ou mandrin 40 en aval du dispositif de déformation 30 et sur lequel la bande de tissu pré-imprégnée 20 est destinée à être enroulée.

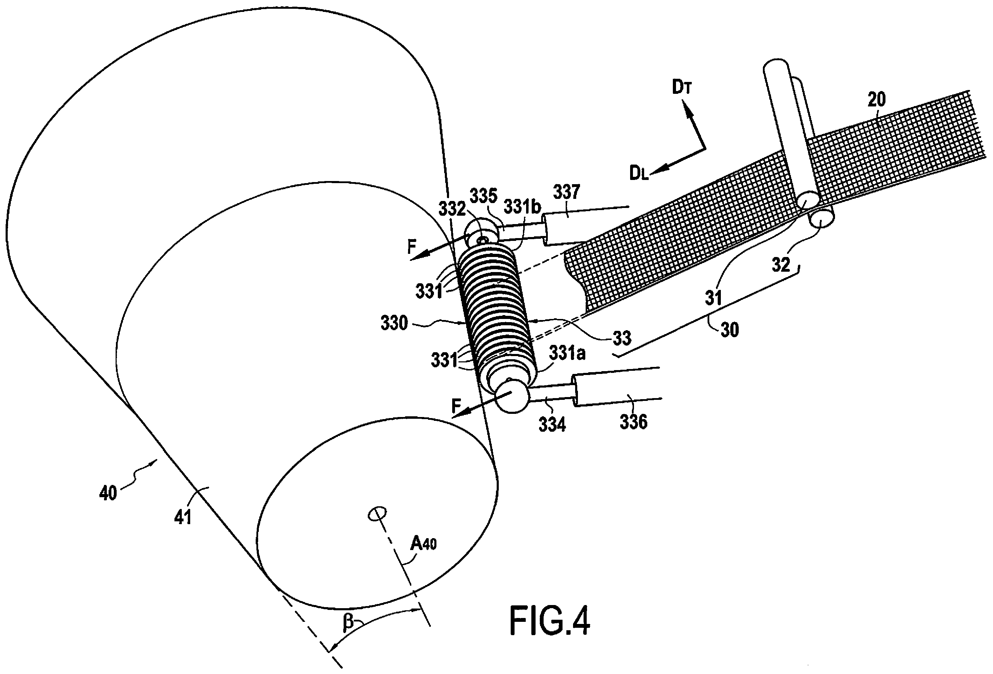

Le dispositif de déformation 30 comprend une paire de rouleaux de freinage 31 et 32 et un dispositif de traction 33 présent en aval de la paire de rouleaux de freinage, le dispositif de traction 33 étant apte à entraîner la bande de tissu pré-imprégnée à des vitesses différentes suivant la direction transversale de la bande. A cet effet, dans l'exemple décrit ici et comme illustré sur la figure 4, le dispositif de traction comprend un rouleau de bobinage 330 qui est formé par une pluralité de galets adjacents 331 qui sont libres en rotation les uns indépendamment des autres. Dans l'exemple décrit ici, chaque galet 331 est monté sur un arbre 332 du rouleau de bobinage 330 via un roulement propre (non représenté sur les figures 2 à 4) qui lui permet d'être entraîné en rotation indépendamment des autres galets présents sur l'arbre 332. Le rouleau de bobinage est maintenu par deux bras 334 et 335 reliés respectivement aux extrémités de l'arbre 332. Les bras 334 et 335 sont reliés à des moyens d'actionnement, par exemple des vérins 336 et 337, permettant d'exercer sur le rouleau de bobinage une force F dirigée vers la surface de révolution 41 du mandrin 40. De cette manière, le rouleau de bobinage 330 exerce via les galets 331 une pression de contact sur la surface de révolution 41 du mandrin 40.

La surface de révolution 41 est inclinée par rapport à son axe de révolution A₄₀, c'est-à-dire qu'elle forme un angle β non nul avec l'axe A₄₀ qui correspond également à l'axe de rotation du mandrin 40. Le mandrin 40 est monté sur un arbre rotatif 42 qui, dans l'exemple décrit ici, est supporté par une broche motorisée 43 et une contre-pointe 44 pour entrainer en rotation le mandrin 40 dans le sens indiqué par la flèche S_{R} sur la figure 2.

La bobine 10 et le dispositif de déformation 30, incluant la paire de rouleaux de freinage 31 et 32 et le dispositif de traction 33 (rouleau de bobinage 330), sont montés sur une plateforme chariot 2 qui repose sur des rails 3, la plateforme chariot 2 étant apte à se déplacer sur les rails 3 dans deux directions indiquées par la double flèche D_{P} sur la figure 2 au fur et à mesure de l'avancement du bobinage. La plateforme chariot 2 est en outre apte à se déplacer suivant la direction D_{L} de manière à suivre l'épaisseur et le profil de la bande déposée. Dans l'exemple décrit ici, la plateforme chariot 2 est reliée à une vis sans fin 5 entraînée par un moteur 4 afin de déplacer la plateforme dans les deux directions. La plateforme chariot 2 peut être reliée à tout autre système d'axe linéaire hydraulique.

Lors du bobinage de la bande de tissu pré-imprégnée 20 sur la surface 41 du mandrin 40, la bande 20 est maintenue plaquée contre la surface 41 par le rouleau de bobinage 330. Lors de son passage entre les galets 331 du rouleau de bobinage 330 et la surface 41 du mandrin 40, la bande 20 est déformée par application d'un effort de traction différentiel sur celle-ci dirigé dans la direction longitudinale D_{L} de la bande. L'application de l'effort de traction différentiel sur la bande de tissu pré-imprégnée 20 est réalisée par la mise en tension de celle-ci entre, d'une part, la paire de rouleaux de freinage 31 et 32 qui retiennent la bande 20 et, d'autre part, le rouleau de bobinage 330 qui exerce sur la bande 20 une pression de contact dirigée vers la surface de révolution 41 du mandrin 40.

Par ailleurs, les galets 331 sont entraînés en rotation à des vitesses différentes suivant leur position sur le rouleau de bobinage. Plus précisément, le galet 331a situé à une première extrémité du rouleau 330 (figure 4) et en contact avec une portion de petit diamètre de l'outillage 40 tourne à une vitesse inférieure par rapport à celles des autres galets 331 adjacents qui sont en contact avec des portions de diamètre plus important de l'outillage 40. Le galet 331b situé à la deuxième extrémité du rouleau 330 (figure 4) correspond au galet qui a la vitesse de rotation la plus élevée par opposition au galet 331a qui la vitesse de rotation la plus faible. La valeur de l'effort de traction appliqué sur la bande 20 est, par conséquent différent suivant la direction transversale D_{T} de la bande puisque le dispositif de traction 33 formé ici du rouleau de bobinage 330 entraîne la bande 20 à des vitesses différentes suivant la direction transversale de la bande.

En d'autres termes, les deux rouleaux de freinage 31 et 32, entre lesquels la bande de tissu pré-imprégnée 20 circule, exercent un effort de freinage ou de retenue sur l'ensemble de la largeur de la bande 20, c'est-à-dire suivant la direction transversale D_{T} de la bande 20. Cet effort de freinage ou de retenue associé à un entrainement à des vitesses différentielles de la bande en aval des rouleaux de freinage permet d'obtenir la déformation souhaitée.

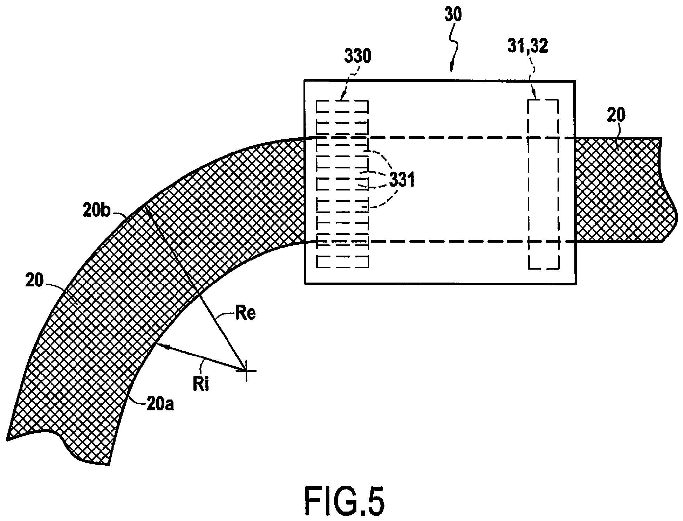

En sortie du dispositif de déformation 30, c'est-à-dire lors de sa dépose sur la surface 41 du mandrin 40, la bande 20 est déformée de manière à lui conférer une courbure et allonger son bord externe 20b par rapport à son bord interne 20b comme représenté sur la figure 5. La figure 5 illustre la bande 20 après déformation, c'est-à-dire en sortie du dispositif de déformation 30. Après déformation, la bande 20 présente une forme courbée présentant une largeur sensiblement constante entre son bord interne 20a correspondant au rayon interne Ri de la bande 20 courbée et son bord externe 20b correspondant au rayon externe Re de la bande 20 courbée. Ainsi, après déformation, la bande de tissu pré-imprégnée 20 épouse parfaitement la géométrie de la surface inclinée 41 du mandrin 40.

La bande 20 est une bande de tissu bidimensionnel ou tridimensionnel qui est formé notamment à partir de fibres de carbone C, de kevlar, ou des fibres céramiques, par exemple en silice, en verre, en carbure de silicium SiC et qui a été préalablement pré-imprégnée avec une résine pouvant être choisi notamment parmi les résines suivantes : résine époxy, ou résine précurseur de matrice, par exemple précurseur de carbone C ou de carbure de silicium SiC.

Dans l'exemple décrit ici, l'installation 1 comprend en outre un dispositif de chauffage 50 présent en amont du dispositif de traction, c'est-à-dire interposé entre les rouleaux de freinage 31 et 32 et le rouleau de bobinage 330. Le dispositif de chauffage peut être muni par exemple de résistances chauffantes ou de lampes de chauffage infrarouge. Le dispositif de chauffage est destiné à faciliter la déformation de la bande de tissu pré-imprégnée en chauffant celle-ci à une température voisine de celle de la température de ramollissement de la résine d'imprégnation.

Toutefois, le dispositif de chauffage n'est pas indispensable, une déformation pouvant déjà être obtenue par application de l'effort de traction différentiel sur la bande.

Selon un aspect particulier de l'invention, l'arbre 332 du rouleau de bobinage est déformable, par exemple en utilisant un matériau déformable pour l'arbre ou en dotant celui-ci d'une structure articulée. Dans ce cas, le rouleau de bobinage peut épouser encore plus facilement la géométrie de la surface de bobinage du mandrin en particulier lorsque celle-ci présente des variations de pentes.

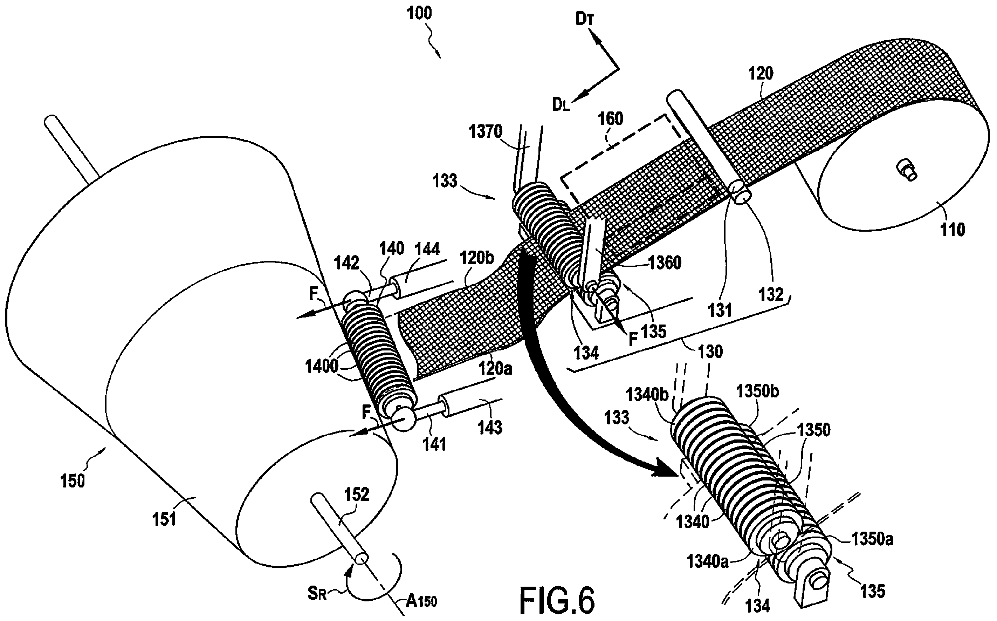

La figure 6 illustre une autre installation de bobinage selon un mode de réalisation ne faisant pas partie de la présente invention et qui diffère de celle décrite ci-avant en ce que les fonctions de déformation de la bande de tissu pré-imprégnée et de bobinage sont dissociées. La figure 6 représente une installation 100 pour le bobinage d'une bande de tissu pré-imprégnée conformément à un mode de réalisation de l'invention. L'installation 100 comprend une bobine 110 sur laquelle est stockée une bande de tissu pré-imprégnée 120, un dispositif de déformation 130 en aval de la bobine 110, un rouleau de bobinage 140 et un outillage de bobinage ou mandrin 150 en aval du dispositif de déformation et sur lequel la bande de tissu pré-imprégnée 120 est destinée à être enroulée.

La bobine 110, le dispositif de déformation 130 et le rouleau de bobinage 140 sont montés sur une plateforme chariot (non représentée sur la figure 6) similaire à la plateforme chariot 2 déjà décrite en relation avec les figures 2 et 3 afin de déplacer ces éléments au fur et à mesure de l'avancement du bobinage le long de la surface de révolution 151 du mandrin 150. Le mandrin 150 est monté sur un arbre rotatif 152 supporté par deux broches (non représentées sur la figure 6) dont au moins l'une d'entre elle comprend un moteur pour entrainer en rotation le mandrin 150 dans le sens indiqué par la flèche S_{R} sur la figure 6 et autour d'un axe de rotation A₁₅₀ correspondant à l'axe de révolution du mandrin 150.

Le dispositif de déformation 130 comprend une paire de rouleaux de freinage 131 et 132 et un dispositif de traction 133 présent en aval de la paire de rouleaux de freinage, le dispositif de traction 133 étant apte à entraîner la bande de tissu pré-imprégnée à des vitesses différentes suivant la direction transversale de la bande. A cet effet, dans l'exemple décrit ici, le dispositif de traction 133 comprend des premier et deuxième rouleaux d'entraînement 134 et 135 présents en aval des rouleaux de freinage 131 et 132. Le premier rouleau d'entraînement 134 est formé par une pluralité de galets adjacents 1340 qui sont entraînés en rotation les uns indépendamment des autres, par exemple au moyen d'arbres emboîtés les uns dans les autres, chaque arbre étant entraîné par un moteur dédié. Le deuxième rouleau d'entraînement 135 est formé par une pluralité de galets adjacents 1350 qui sont libres en rotation les uns indépendamment des autres, chaque galet 1350 étant monté sur un arbre 1352 via un roulement propre (non représenté sur la figure 6) qui lui permet d'être entraîné en rotation indépendamment des autres galets présents sur l'arbre 1352. Les galets 1340 du premier rouleau d'entraînement 134 sont placés en vis-à-vis des galets 1350 du deuxième rouleau d'entraînement 135. Le premier rouleau d'entraînement 134 est monté sur deux bras 1360 et 1370. Les bras 1360 et 1370 sont reliés à des moyens d'actionnement comme par exemple des vérins permettant d'exercer sur le premier rouleau d'entraînement 1340 une force F dirigée vers le deuxième rouleau d'entraînement 135, ce dernier étant maintenu à une position fixe. De cette manière, le premier rouleau d'entraînement 134 exerce via les galets 1340 une pression de contact sur les galets 1350 du deuxième rouleau d'entraînement 135. Selon une variante de réalisation, le deuxième rouleau d'entraînement est relié à des bras et des moyens d'actionnement, par exemple de vérins, de manière à exercer sur le deuxième rouleau d'entraînement une force dirigée vers le premier rouleau d'entraînement, ce dernier étant maintenu à une position fixe.

Le rouleau de bobinage 140 est également formé d'une pluralité de galets 1400 libres en rotation les uns indépendamment des autres. Le rouleau de bobinage 140 est maintenu par deux bras 141 et 142 reliés à des moyens d'actionnement comme par exemple des vérins 143 et 144 permettant d'exercer sur le rouleau de bobinage une force F dirigée vers la surface de révolution 151 du mandrin 150. De cette manière, le rouleau de bobinage 140 exerce via les galets 1400 une pression de contact sur la surface de révolution 151 du mandrin 150 qui permet de compacter la bande de tissu pré-imprégnée 120 lors de son bobinage sur le mandrin 150. La surface de révolution 151 est inclinée par rapport à son axe de révolution A₁₅₀, c'est-à-dire qu'elle forme un angle non nul avec l'axe A₁₅₀ qui correspond également à l'axe de rotation du mandrin 150.

Lors de son passage entre les rouleaux d'entraînement 134 et 135, la bande 120 est déformée par application d'un effort de traction différentiel sur celle-ci dirigé dans la direction longitudinale D_{L} de la bande. L'application de l'effort de traction différentiel sur la bande de tissu pré-imprégnée 120 est réalisée par la mise en tension de celle-ci entre, d'une part, la paire de rouleaux de freinage 131 et 132 qui retiennent la bande 120 et, d'autre part, les rouleaux d'entraînement 134 et 135 dont les galets sont entraînés en rotation à des vitesses différentes.

Plus précisément, à titre d'exemple non limitatif, la paire de galets 1340a et 1350a en vis-à-vis située à une première extrémité des rouleaux 134 et 135 tournent à une vitesse inférieure par rapport à celles des autres paires de galets en vis-à-vis des rouleaux 134 et 135 adjacents. Les galets 1340b et 1350b en vis-à-vis située à la deuxième extrémité des rouleaux 134 et 135 correspond aux galets qui ont la vitesse de rotation la plus élevée par opposition aux galets 1340a et 1350a qui ont la vitesse de rotation la plus faible, les galets en vis-à-vis situés entre la paire de galets 1340a et 1350a et la paire de galets 1340b et 1350b ayant une vitesse de rotation qui augmente progressivement entre la paire de galets 1340a et 1350a et la paire de galets 1340b et 1350b. La valeur de l'effort de traction appliqué sur la bande 120 est, par conséquent différent suivant la direction transversale D_{T} de la bande puisque le dispositif de traction 133 formé ici des rouleaux d'entraînement 134 et 135 entraîne la bande 120 à des vitesses différentes suivant la direction transversale D_{T} de la bande.

La vitesse de chaque paire de galets 1340 et 1350 en vis-à-vis des rouleaux d'entraînement 134 et 135 est définie en fonction de la géométrie de la surface 151 du mandrin 150 sur lequel la bande 120 doit être déposée. Ainsi, en sortie du dispositif de déformation 130, c'est-à-dire avant son passage entre le rouleau de bobinage 150 et la surface de révolution 151 du mandrin 150, la bande 120 est déformée de manière à lui conférer une courbure et allonger son bord externe 120b par rapport à son bord interne 120a. Ainsi, après déformation, la bande de tissu pré-imprégnée 120 épouse parfaitement la géométrie de la surface inclinée 151 du mandrin 150.

Lors du bobinage de la bande de tissu pré-imprégnée 120 sur la surface 151 du mandrin 150, la bande 120 est maintenue plaquée contre la surface 151 par le rouleau de bobinage 140.

Dans l'exemple décrit ici, l'installation 100 comprend en outre un dispositif de chauffage 160 intégré au dispositif de traction, c'est-à-dire présent entre les rouleaux de freinage 131 et 132 et les rouleaux d'entraînement 134 et 135 de sorte que la bande de tissu pré-imprégnée est chauffée pendant l'étape de déformation. Le dispositif de chauffage peut être muni par exemple de résistances chauffantes ou de lampes de chauffage infrarouge. Le dispositif de chauffage est destiné à faciliter la déformation de la bande de tissu pré-imprégnée en chauffant celle-ci à une température voisine de celle de la température de ramollissement de la résine d'imprégnation.

Toutefois, le dispositif de chauffage n'est pas indispensable, une déformation pouvant déjà être obtenue par application de l'effort de traction différentiel sur la bande.

## Revendications

1. Procédé de bobinage d'une bande de tissu pré-imprégnée (20) sur une surface inclinée d'un outillage de bobinage (40), la bande de tissu pré-imprégnée s'étendant en longueur suivant une direction longitudinale (D_{L}) et en largeur suivant une direction transversale (D_{T}), le procédé comprenant :
- une étape de déformation de la bande de tissu pré-imprégnée (20) par application d'un effort de traction différentiel sur la bande de tissu pré-imprégnée, l'effort de traction étant dirigé dans la direction longitudinale (D_{L}) de la bande, la valeur de l'effort de traction appliqué étant différente suivant la direction transversale (D_{T}) de la bande, l'application de l'effort de traction différentiel étant réalisée par mise en tension de la bande de tissu pré-imprégnée entre, d'une part, une paire de rouleaux de freinage (31, 32) et, d'autre part, un dispositif de traction (33) présent en aval de la paire de rouleaux de freinage, le dispositif de traction entraînant la bande de tissu pré-imprégnée (20) à des vitesses différentes suivant la direction transversale (D_{T}) de la bande,
- une étape d'enroulement de la bande déformée sur une surface de révolution (41) de l'outillage de bobinage (40) comportant au moins une portion formant un angle non nul (β) avec l'axe de révolution (A₄₀) de la surface de révolution (41),
**caractérisé en ce que** le dispositif de traction (33) comprend l'outillage de bobinage (40) ayant une surface de révolution (41) comportant au moins une portion formant un angle non nul (β) avec l'axe de révolution (A₄₀) de la surface de révolution (41) et un rouleau de bobinage (330) comprenant une pluralité de galets (331) libres en rotation indépendamment les uns des autres, l'outillage de bobinage (40) étant entraîné en rotation et le rouleau de bobinage (330) exerçant sur la bande de tissu pré-imprégnée (20) une pression de contact dirigée vers la surface de révolution (41) de l'outillage de bobinage (40).

2. Procédé selon la revendication 1 , comprenant en outre, avant ou pendant l'étape de déformation, une étape de chauffage de la bande de tissu pré-imprégnée d'une résine à une température supérieure ou égale à la température de ramollissement de la résine.

3. Installation (1) pour le bobinage d'une bande de tissu pré-imprégnée (20) sur une surface inclinée, l'installation comprenant un outillage de bobinage (40) présentant une surface de révolution (41) comportant au moins une portion formant un angle (β) non nul avec l'axe de révolution (A₄₀) de la surface de révolution et un dispositif de déformation (30) présent en amont de l'outillage de bobinage (40), le dispositif de déformation (30) comprenant une paire de rouleaux de freinage (31, 32) et un dispositif de traction (33) présent en aval de la paire de rouleaux de freinage, le dispositif de traction (33) étant apte à entraîner la bande de tissu pré-imprégnée à des vitesses différentes suivant la direction transversale (D_{T}) de la bande **caractérisé en ce que** le dispositif de traction (33) comprend un rouleau de bobinage (330) comprenant une pluralité de galets (331) libres en rotation indépendamment les uns des autres, le rouleau de bobinage (330) exerçant une pression de contact dirigée vers la surface de révolution (41) de l'outillage de bobinage (40).

4. Installation selon la revendication 3, comprenant en outre un dispositif de chauffage (50) présent en amont du dispositif de traction ou intégré à celui-ci.

5. Installation selon la revendication 3, dans laquelle les galets (331) du rouleau de bobinage (330) sont supportés par un arbre apte à se déformer.

## Patentansprüche

1. Verfahren und Anlage zum Wickeln eines vorimprägnierten Stoffbands (20) auf eine geneigte Oberfläche eines Wickelwerkzeugs (40), wobei sich das vorimprägnierte Stoffband in der Länge gemäß einer Längsrichtung (D_{L}) und in der Breite gemäß einer Querrichtung (D_{T}), erstreckt, wobei das Verfahren Folgendes umfasst:
- einen Schritt des Verformens des vorimprägnierten Stoffbands (20) durch Anwenden einer differenzialen Zugkraft auf das vorimprägnierte Stoffband, wobei die Zugkraft in die Längsrichtung (D_{L}) des Bands gerichtet ist, wobei der Grad der angewendeten Zugkraft verschieden gemäß der Querrichtung (D_{T}) des Bands verschieden ist, wobei die Anwendung der differenzierten Zugkraft durch Unter-Spannung-Setzen des vorimprägnierten Stoffbands zwischen einerseits einem Paar Bremsrollen (31, 32) und andererseits einer Zugvorrichtung (33) erfolgt, die nachgelagert von dem Paar Bremsrollen angeordnet ist, wobei die Zugvorrichtung das vorimprägnierte Stoffband (20) mit verschiedenen Geschwindigkeiten gemäß der Querrichtung (D_{T}) des Bands antreibt,
- einen Schritt des Wickelns des verformten Bands auf einer Rotationsfläche (41) des Wickelwerkzeugs (40), umfassend mindestens einen Abschnitt, der einen Winkel ungleich null (β) mit der Rotationsachse (A₄₀) der Rotationsfläche (41) bildet,
**dadurch gekennzeichnet, dass** die Zugvorrichtung (33) das Wickelwerkzeug (40) mit einer Rotationsfläche (41) umfasst, umfassend mindestens einen Abschnitt, der einen Winkel ungleich null (β) mit der Rotationsachse (A₄₀) der Rotationsfläche (41) bildet, und eine Wickelrolle (330), umfassend eine Vielzahl von Laufrollen (331), die unabhängig voneinander frei drehbar sind, wobei das Wickelwerkzeug (40) in Rotation versetzt wird und die Wickelrolle (330) auf das vorimprägnierten Stoffband (20) einen Kontaktdruck ausübt, der auf die Rotationsfläche (41) des Wickelwerkzeugs (40) gerichtet ist.

2. Verfahren nach Anspruch 1, außerdem umfassend vor oder während des Schritts des Verformens einen Schritt des Erhitzens des mit einem Harz vorimprägnierten Stoffbands auf eine Temperatur, die höher als oder gleich wie die die Erweichungstemperatur des Harzes ist.

3. Anlage (1) zum Wickeln eines vorimprägnierten Stoffbands (20) auf eine geneigte Oberfläche, wobei die Anlage ein Wickelwerkzeug (40) umfasst, das eine Rotationsfläche (41) aufweist, die mindestens einen Abschnitt, der einen Winkel ungleich null (β) umfasst, mit der Rotationsachse (A₄₀) der Rotationsfläche bildet, und eine Verformungsvorrichtung (30) die vorgelagert vom Wickelwerkzeug (40) angeordnet ist, wobei die Verformungsvorrichtung (30) ein Paar Bremsrollen (31, 32) umfasst und eine Zugvorrichtung (33), die nachgelagert von dem Paar von Bremsrollen angeordnet ist, wobei die Zugvorrichtung (33) ausgelegt ist, um das vorimprägnierte Stoffband mit verschiedenen Geschwindigkeiten gemäß der Querrichtung (D_{T}) des Bandes anzutreiben, **dadurch gekennzeichnet, dass** die Zugvorrichtung (33) eine Wickelrolle (330) umfasst, umfassend eine Vielzahl von Laufrollen (331), die unabhängig voneinander frei drehbar sind, wobei die Wickelrolle (330) einen Kontaktdruck ausübt, der auf die Rotationsfläche (41) des Wickelwerkzeugs (40) gerichtet ist.

4. Anlage nach Anspruch 3, außerdem umfassend eine Heizvorrichtung (50), die stromaufwärts der Zugvorrichtung angeordnet oder in diese integriert ist.

5. Anlage nach Anspruch 3, wobei die Laufrollen (331) der Wickelrolle (330) von einer Welle getragen werden, die ausgelegt ist, um sich zu verformen.

## Claims

1. A method of winding a pre-impregnated fabric strip (20) onto a sloping surface (40), the pre-impregnated fabric strip extending lengthwise in a longitudinal direction (DL) and widthwise in a transverse direction (DT), the method comprising:
• a step of deforming the pre-impregnated fabric strip (20) by applying differing traction forces to the pre-impregnated fabric strip, the traction forces being directed in the longitudinal direction (DL) of the strip, the values of the applied traction forces differing across the transverse direction (DT) of the strip, the differing traction forces being applied by tensioning the pre-impregnated fabric strip between firstly a pair of brake rollers and secondly a traction device present downstream from the pair of brake rollers (31,32), the traction device (33) driving the pre-impregnated fabric strip (20) at speeds that differ across the transverse direction (DT) of the strip; and
• a step of winding the deformed strip onto a surface of revolution (41) of winding tooling (40) including at least one portion that forms a nonzero angle (β) with the axis of revolution (A40) of the surface of revolution (41),
characterized the traction device (33) comprises the winding tooling (40) having a surface of revolution (41) including at least one portion forming a nonzero angle (β) with the axis of revolution (A40) of the surface of revolution (41) and a winding roller (330) having a plurality of wheels (331) that are free to rotate independently of one another, the winding tooling (40) being driven in rotation and the winding roller (330) exerting contact pressure on the pre-impregnated fabric strip (20), which pressure is directed towards the surface of revolution (41) of the winding tooling (40).

2. A method according to claim 1, further comprising, before or during the deformation step, a step of heating the fabric strip pre-impregnated with a resin to a temperature that is higher than or equal to the softening temperature of the resin.

3. An installation (1) for winding a pre-impregnated fabric strip (20) onto a sloping surface, the installation comprising winding tooling (40) presenting a surface of revolution (41) including at least one portion forming a nonzero angle (β) with the axis of revolution (A40) of the surface of revolution and a deformation device (30) present downstream from the winding tooling (40), the deformation device (30) comprising a pair of brake rollers (31, 32) and a traction device (33) present downstream from the pair of brake rollers, the traction device (33) being suitable for driving the pre-impregnated fabric strip at speeds that differ across the transverse direction (DT) of the strip **characterized in that** the traction device (33) comprises a winding roller (330) having a plurality of wheels (331) that are free to rotate independently of one another, the winding roller (330) exerting contact pressure directed towards the surface of revolution (41) of the winding tooling (40).

4. An installation according to claim 3, further comprising a heater device (50) present upstream from the traction device or integrated therewith.

5. An installation according to claim 3, wherein the wheels (331) of the winding roller (330) are supported by a shaft that is suitable for deforming.
